# EUROPÄISCHE PATENTSCHRIFT

(11) **EP 1 086 657 B1**
(45) Veröffentlichungstag und Bekanntmachung des Hinweises auf die Patenterteilung: **21.12.2005**
(21) Anmeldenummer: 00890140.7
(22) Anmeldetag: 03.05.2000
(51) Int. Cl.: A61C 1/05

(54) **Zahnärztliches Handstück**
Dental handpiece
Pièce à main dentaire

(30) Priorität: 05.05.1999 AT 80199
(43) Veröffentlichungstag der Anmeldung: 28.03.2001
(73) Patentinhaber: W & H Dentalwerk Bürmoos GmbH, 5111 Bürmoos (AT)
(72) Erfinder: Schwenoha, Martin, Ing., 5120 St. Pantaleon 11/5 (AT)
(74) Vertreter: Patentanwälte BARGER, PISO & PARTNER

(56) Entgegenhaltungen:
- US-A- 5 807 108
- PATENT ABSTRACTS OF JAPAN vol. 1995, no. 04, 31. Mai 1995 (1995-05-31) -& JP 07 023980 A (YOSHIDA DENTAL MFG CO LTD), 27. Januar 1995 (1995-01-27)

## Beschreibung

Die Erfindung betrifft ein zahnärztliches Handstück gemäß dem einleitenden Teil des Anspruches 1. Ein derartiges Handstück ist aus der unten abgehandelten AT 403 882 B bekannt und hat sich im wesentlichen bewährt.

Ein systemimanenter Nachteil derartiger Handstücke ist es, daß beim Beenden eines Arbeitsvorganges im Mund eines Patienten, wenn die Antriebsluft durch Betätigen eines entsprechenden Ventils in der Handstücksteuerung unterbrochen wird, die Turbine zufolge ihrer Massenträgheit noch nachläuft, wobei an der Außenseite des Turbinenrotors ein Überdruck und in seinen achsnahen Bereichen ein Unterdruck entsteht.

Da der Kanal für die Rückluft im Rotoraußenbereich in das Turbinengehäuse mündet, wird Luft vom auslaufenden Rotor in den Rückluftkanal gefördert und im achsnahen Bereich durch alle im Handstück vorhandenen feinen Kanäle und Spalten angesaugt. Dadurch wird insbesondere Luft angesaugt, die mit Speichel und Blut des gerade behandelten Patienten kontaminiert ist und gelangt durch die Lager in die Turbinenkammer und in den Rückluftkanal.

Bei erneuter Inbetriebnahme des Handstückes wird im Bereich der Turbinenkammer und der Lager verbliebene kontaminierte Luft und die dort abgesetzten Verunreinigungen durch den nunmehr in der gesamten Turbinenkammer aufgebauten Überdruck nicht nur durch den Rückluftkanal abgeführt, sondern zu einem gewissen Anteil auch nach außen, in den Mund, den Speichel und eventuell in eine bereits offene Wunde des nächsten Patienten geschleudert bzw. ausgeblasen.

Eine Lösung dieses Problems ist in der AT 403 882 B beschrieben. Dabei wird vorgeschlagen, axial zwischen der Turbine und dem werkzeugseitigen Ende der Werkzeugaufnahme eine Verbindung zwischen einem achsnahen Bereich und dem Rückluftkanal zu schaffen, so daß die auslaufende Turbine die Luft in einer Art strömungstechnischem Kurzschluß innerhalb des Handstückkopfes bewegt, aber keine Luft von außen ansaugt.

In einer Variante ist vorgesehen, daß auf der dem Werkzeug abgewandten Seite des Rotors ein Verbindungskanal zwischen dem Rückluftkanal und einer Öffnung im achsnahen Bereich der Turbinenkammer und/oder einem Hohlraum im Bereich des Betätigungselementes für die Werkzeughalterung vorgesehen ist.

Bei der praktischen Umsetzung dieser Variante stößt man auf das Problem, daß für einen solchen Verbindungskanal zufolge der Miniaturisierung der Handstückköpfe kein bzw. nur minimaler Platz vorhanden ist.

Eine andere Art von Handstück ist aus der JP 07 023980 A bekannt. Bei dieser Konstruktion ohne Rückluftkanal wird die abgearbeitete Treibluft aus einem um den Werkzeugschaft herum angeordneten Ringspalt nach außen geblasen, um jedwedes Eindringen von Fremdmaterial entlang der rotierenden Oberfläche des Werkzeugschafts in den Handstückkopf während des Arbeitens zu verhindern.

Die Erfindung bezweckt, dieses Problem zu vermeiden und einen Handstückkopf zu schaffen, der auch in seinem dem Werkzeug abgewandten Bereich während des Auslaufes der Turbine keine Luft aus der Umgebung ansaugt.

Erfindungsgemäß werden diese Ziele dadurch erreicht, daß der radial äußere Bereich der Turbinenkammer durch zumindest einen luftdurchlässigen Verbindungskanal mit dem unterhalb des Betätigungselementes für die Werkzeughalterung bestehenden Hohlraum verbunden ist. Dieser Verbindungskanal ist beispielsweise in der Lagerhalterung vorgesehen und damit nur kurz und geradlinig.

Es wird bei der erfindungsgemäßen Lösung während des Auslaufes der Turbine im werkzeugabgewandten Bereich die im äußeren Turbinenkammerbereich befindliche, durch den nach wie vor laufenden Rotor unter Überdruck stehende Luft durch den erfindungsgemäß vorgesehenen Verbindungskanal in den Hohlraum unterhalb des Druckknopfes gefördert und gelangt von dort durch die Lager zurück in den achsnahen Bereich der Turbinenkammer, in dem ja ein Unterdruck herrscht.

Es können gegebenenfalls geringe Luftstromanteile auch durch die feinen, toleranzbedingten Spalten und Zwischenräume zwischen dem Druckknopf und dem eigentlichen Handstückkopf nach außen gelangen, so daß jedenfalls jegliches Ansaugen von Umgebungsluft zuverlässig verhindert wird.

Die Erfindung wird im folgenden an Hand der Zeichnung näher erläutert. Dabei zeigt
die Fig. 1 eine der Lösungen gemäß dem Stand der Technik,
die Fig. 2 die Luftströmungen im oberen Handstückkopfbereich bei einem Handstück ohne der in Fig. 1 gezeigten Lösung, somit ebenfalls dem Stand der Technik entsprechend,

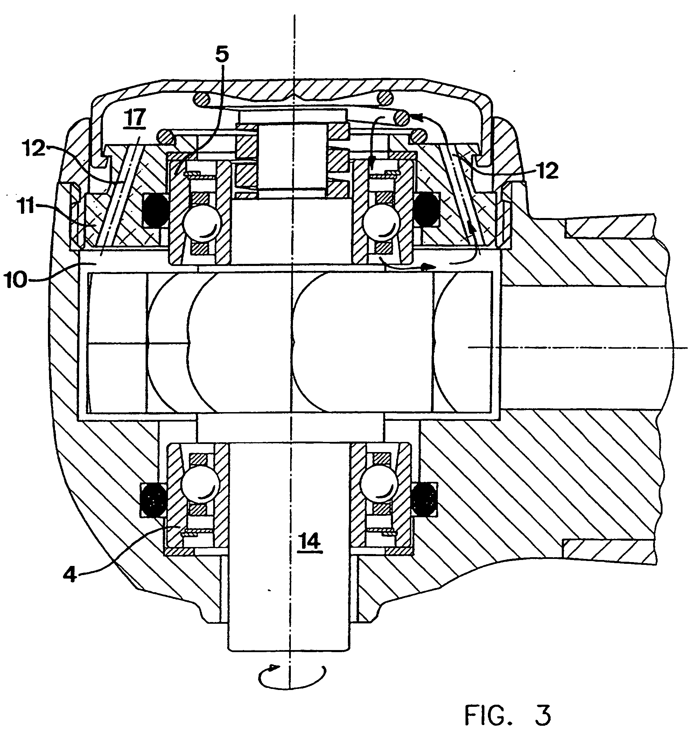

die Fig. 3 eine erfindungsgemäße Ausgestaltung des Handstückkopfes der Fig. 2 und
die Fig. 4 eine Variante, bei der zu beiden Seiten des Rotors erfindungsgemäße Kanäle vorgesehen sind.

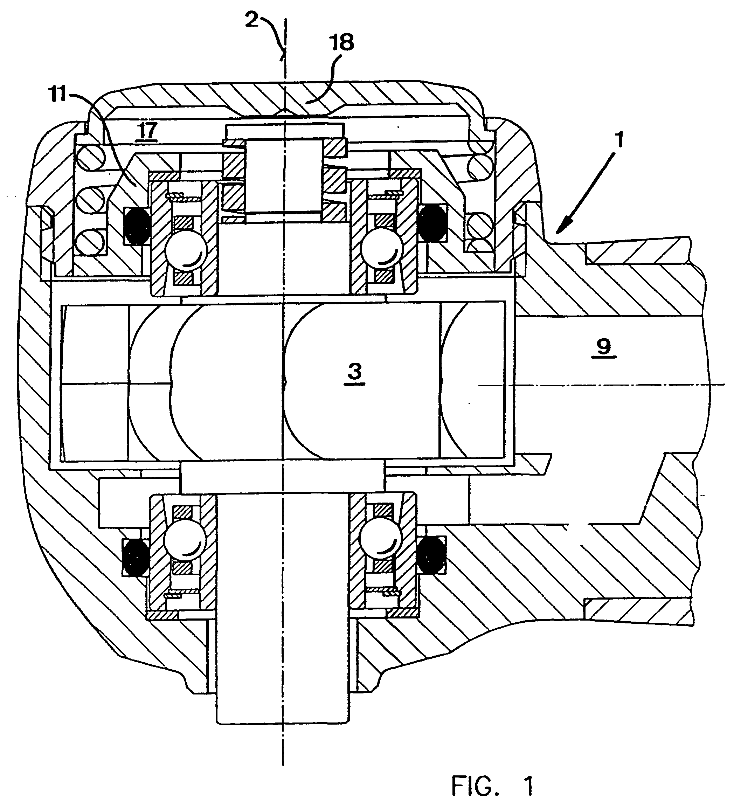

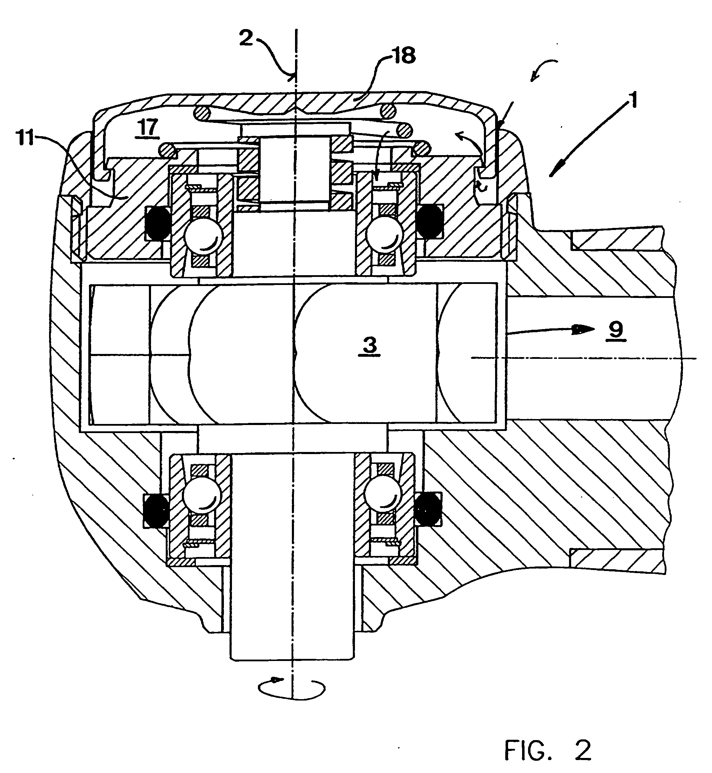

Wie aus einem Vergleich der drei Figuren hervorgeht, ist es unmittelbar einsichtig, daß die erfindungsgemäße Lösung sowohl bei Handstücken gemäß der AT 403 882 B, entsprechend der Fig. 1, verwendet werden kann, als auch bei Handstücken, die dem in dieser vorbekannten Druckschrift gewürdigten Stand der Technik entsprechend der Fig. 2.

Wie aus den Figuren 1 und 2 ersichtlich ist, ist bei dentalen Handstücken gemäß dem Stand der Technik das Problem des Ansaugens kontaminierter Luft, entweder garnicht (Fig. 2), oder nur teilweise (Fig. 1) gelöst worden.

In Fig. 2 ist mit den Pfeilen F der Weg der Umgebungsluft durch den Ringspalt zwischen dem Druckknopf 18 und dem Handstück 1 in den Innenraum des Handstückkopfes und von dort durch die Druckknopffeder in den axial inneren Bereich des Turbinengehäuses gekennzeichnet.

Man erkennt sowohl aus Fig. 1 als auch aus Fig. 2 die Probleme, die beim Versuch entstehen, einen Verbindungskanal zwischen dem Rückluftkanal 9 und dem Hohlraum 17 unter dem Druckknopf 18 zu schaffen. Erfindungsgemäß werden diese Probleme zufriedenstellend gelöst, wenn zumindest ein Verbindungskanal 12 vom achsfernen Bereich der Turbinenkammer 10 in den Hohlraum 17 führt.

Ein solcher Verbindungskanal 12 kann beispielsweise im Lagerblock 11 für das werkzeugferne Lager 5 vorgesehen sein. Selbst bei einer Ausgestaltung dieses Blockes wie in Fig. 1 dargestellt, ist durch eine kleine Modifikation, beispielsweise der Auflage für die Feder 6, eine solche Verbindung problemlos zu schaffen.

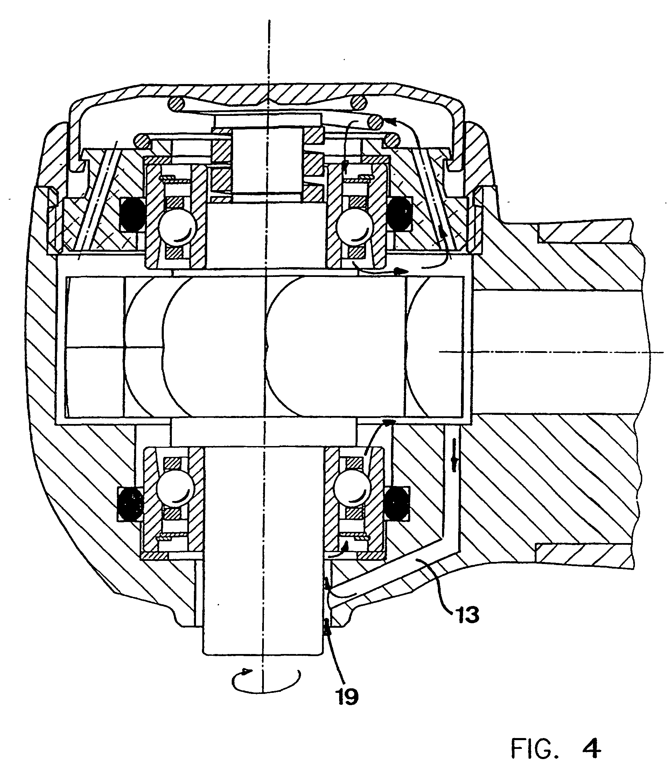

Aus Fig. 4 ist ersichtlich, daß die Grundidee der Erfindung auch für die werkzeugseitigen Achsbereiche des Rotors anwendbar ist: Eine Leitung 13 verbindet den radial äußeren Bereich der Turbinenkammer 10 mit dem Ringspalt zwischen der Rotorspindel 14 und der Wand des Kopfgehäuses.

In Fig. 4 sind auch die Kanäle 12 analog zur Fig. 4 dargestellt, es kann, wie daraus ersichtlich ist, die Erfindung zu beiden Seiten des Rotors angewandt werden.

## Patentansprüche

1. Zahnärztliches Handstück mit einem im Handstückkopf angeordneten, die Rotorspindel (14) in Rotation versetzenden Turbinenrotor (3), der werkzeugseitig und werkzeugabgewandt des Rotors, bevorzugt in Wälzlagern (4, 5), gelagert ist, mit einem Treibluftkanal für die Antriebsluft der Turbine und einem Rückluftkanal (9) für die expandierte Rückluft der Turbine, **dadurch gekennzeichnet, daß** der radial äußere Bereich der Turbinenkammer durch zumindest einen luftdurchlässigen Verbindungskanal (12, 13) mit dem unterhalb des Betätigungselementes (18) für die Werkzeughalterung bestehenden Hohlraum (17) und/oder mit einem achsnahen Ringkanal (19), beispielsweise zwischen der Rotorspindel (14) und dem Kopfgehäuse, verbunden ist.

2. Handstück nach Anspruch 1, **dadurch gekennzeichnet, daß** mehrere, in Umfangsrichtung verteilte, schräg verlaufende Verbindungskanäle (12) im Lagerblock (11) des werkzeugfernen Lagers (5) vorgesehen sind.

3. Handstück nach Anspruch 1, **dadurch gekennzeichnet, daß** im Handstückkopf mehrere, in Umfangsrichtung verteilte, geknickte Verbindungskanäle (13) um das werkzeugnahe Lager (4) führend vorgesehen sind.

## Claims

1. A hand-operated dental device with a turbine rotor (3) which is disposed in the head of the hand-operated device, which imparts rotation to the rotor spindle (14) and which is mounted, preferably in rolling bearings (4,5), on the tool side and on the side of the tool remote from the rotor, with an impelling air duct for the propelling air and with an air-return duct (9) for the expanded return of the turbine, **characterised in that** the radially outer zone of the turbine chamber is connected by at least one air-permeable connecting duct (12,13) to the hollow space (17) disposed below the actuating element (18) for the tool holder and/or to an annular duct (19) near the axis, for example between the rotor spindle (14) and the head housing.

2. A hand-operated device according to Claim 1, **characterised in that** a plurality of peripherally spaced, angularly extending connecting ducts (12) are provided in the bearing block (11) of the bearing (5) remote from the tool.

3. A hand-operated device according to Claim 1, **characterised in that** a plurality of peripherally spaced, bent connecting ducts (13) are provided in the head of the hand-operated device, which ducts are directed around the bearing (4) near the tool.

## Revendications

1. Pièce à main dentaire comportant un rotor de turbine (3) agencé dans la tête de la pièce à main, mettant en rotation la broche de rotor (14) et monté du côté outil et du côté détourné de l'outil, de préférence dans des paliers à roulement (4, 5), comportant un canal à air d'entraînement pour l'air d'entraînement de la turbine et un canal à air de retour (9) pour l'air de retour expansé de la turbine, **caractérisé en ce que** la zone radialement extérieure de la chambre de turbine est reliée, par au moins un canal de liaison (12, 13) perméable à l'air, à la cavité (17) existant au-dessous de l'élément d'actionnement (18) pour le porte-outil et/ou à un canal annulaire (19) proche de l'axe, par exemple entre la broche de rotor (14) et le boîtier de tête.

2. Pièce à main selon la revendication 1, **caractérisée en ce qu'**il est prévu plusieurs canaux de liaison (12) répartis en direction périphérique et s'étendant en oblique, dans le bloc de montage (11) du palier (5) éloigné de l'outil.

3. Pièce à main selon la revendication 1, **caractérisée en ce qu'**il est prévu plusieurs canaux de liaison (13) coudés répartis en direction périphérique dans la tête de la pièce à main et menant autour du palier (4) proche de l'outil.
